# EUROPÄISCHE PATENTSCHRIFT

(11) **EP 2 499 775 B1**
(45) Veröffentlichungstag und Bekanntmachung des Hinweises auf die Patenterteilung: **16.08.2017**
(21) Anmeldenummer: 10784285.8
(22) Anmeldetag: 17.11.2010
(51) Int. Cl.: H04L 9/08, H04L 9/32, H04L 29/06

(54) **VORRICHTUNG UND VERFAHREN ZUM ABSICHERN EINES AUSHANDELNS VON MINDESTENS EINEM KRYPTOGRAPHISCHEN SCHLÜSSEL ZWISCHEN GERÄTEN**
APPARATUS AND METHOD FOR SECURING THE AGREEMENT OF A CRYPTOGRAPHIC KEY
DISPOSITIF ET PROCÉDÉ DE SÉCURISATION DE L'ACCORD D'UNE CLÉ CRYPTOGRAPHIQUE

(30) Priorität: 21.12.2009 DE 102009059893
(43) Veröffentlichungstag der Anmeldung: 19.09.2012
(73) Patentinhaber: Siemens Schweiz AG, 8047 Zürich (CH)
(72) Erfinder: GESSNER, Jürgen, 85661 Forstinning (DE); ISLER, Bernhard, CH-8832 Wilen b. Wollerau (CH); LIESE, Frank, 82061 Neuried (DE)
(74) Vertreter: Maier, Daniel Oliver
(86) Internationale Anmeldenummer: PCT/EP2010/067648
(87) Internationale Veröffentlichungsnummer: WO 2011/076491

(56) Entgegenhaltungen:
- EP-A2- 1 901 145
- WO-A2-2005/010214
- DE-A1-102004 052 194
- "Chapter 12: Key Establishment Protocols ED - Menezes A J; Van Oorschot P C; Vanstone S A", [Online] 1. Oktober 1996 (1996-10-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 489 - 541, XP001525012, ISBN: 978-0-8493-8523-0 Gefunden im Internet: URL:http://www.cacr.math.uwaterloo.ca/hac/ > protocol 12.40; Seite 511

## Beschreibung

Vorrichtung und Verfahren zum Absichern eines Aushandelns von kryptographischen Schlüsseln zwischen Geräten Die vorliegende Erfindung betrifft ein Verfahren und eine Vorrichtung zum Gewährleisten einer abhörsicheren und fälschungssicheren Kommunikation zwischen Geräten und insbesondere ein Verfahren und eine Vorrichtung zum Absichern eines Aushandelns von mindestens einem kryptographischen Schlüssel. Die vorliegende Erfindung betrifft ferner ein Computerprogrammprodukt, welches die Durchführung eines Verfahrens zum Absichern eines Aushandelns von mindestens einem kryptographischen Schlüssel veranlasst sowie einen Datenspeicher der das Computerprogrammprodukt abspeichert.

In der modernen Gebäudetechnik werden eine Vielzahl von Geräten und Bauelementen nicht nur in Fabrikgebäuden, sondern auch Geschäfts- und Privatgebäuden verbaut. Hierbei ist es möglich, dass zumindest eine Auswahl der verbauten Geräte untereinander kommuniziert und dabei Daten austauscht. Ein mögliches Anwendungsszenario von untereinander kommunizierenden Geräten ist die Gebäudeautomatisierung. Hierbei ist typischerweise eine zentrale Steuerungseinheit vorgesehen, welche eine Vielzahl von Geräten mittels Steuerbefehlen anspricht und somit zum Beispiel eine Klimatisierung des gesamten Gebäudes regelt. Die Geräte, welche in einem Gebäude verbaut sind, können mittels einer geeigneten Infrastruktur ein Peer-to-Peer oder ein Client-Server Netzwerk ausbilden.

Außerdem sind Fahrzeuge bekannt, welche mit Steuereinheiten versehen sind, die mittels einer Luftschnittstelle mit Geräten eines Haushalts kommunizieren. So ist es bekannt, dass ein Autofahrer mittels seines Autodisplays über eine Mobilfunkschnittstelle eine Wärmeentwicklung des Heizkörpers oder ein Schließen oder Öffnen eines Rollladens steuern kann. Da in den beschriebenen Anwendungsszenarien die Vielzahl von Geräten von zum Teil unterschiedlichen Herstellern miteinander kommuniziert, weisen die Kommunikationsnetzwerke eine hohe Heterogenität bezüglich der Hersteller von Netzwerkkomponenten sowie der Verwendung von Netzwerkprotokollen auf. Wesentlich in diesem Anwendungsszenario ist, dass die Kommunikation zwischen den einzelnen Geräten sowohl abhörsicher, als auch fälschungssicher durchgeführt werden kann. Hierzu sind verschiedene Netzwerktechniken sowie Verschlüsselungsprotokolle bekannt.

Insbesondere in der Gebäudeautomatisierung, das heißt bei einem automatisierten Ansteuern von Geräten, welche in Gebäuden verbaut sind, ist das BACnet Protokoll bekannt. BACnet steht hierbei für "Building Automation and Control Network". Hierbei handelt es sich um ein Netzwerkprotokoll, welches zur Kommunikation von Geräten in der Gebäudeautomatisierungstechnik und einem entsprechenden Gefahrenmanagement Einsatz findet. BACnet Security basiert auf symmetrischer Kryptographie, das heißt die kommunizierenden Geräte müssen ein Geheimnis, auch Key genannt, gemeinsam haben. Für die Verteilung von Keys ist ein Key-Server vorgesehen, der aufbauend auf einem "Basis-Key" weitere Schlüssel sicher an die kommunizierenden Geräte verteilt. Dieser "Basis-Key", im BACnet Standard als "Device-Master-Key" bezeichnet, ist individuell und für jedes Gerät unterschiedlich. Er muss in geeigneter, sicherer Weise und mit möglichst wenig Konfigurationsaufwand in den Key-Server beziehungsweise in das kommunizierende Gerät eingebracht werden um die sichere Verteilung weiterer Schlüssel zwischen Key-Server und Gerät zu ermöglichen.

Die BACnet Spezifikation beschreibt ein Ausliefern der Geräte mit einem Device-Master-Key, der auf einem sogenannten "Tearoff-Label" aufgedruckt ist. Das Label wird entfernt und der Device-Master-Key manuell in den Key-Server eingegeben. Des Weiteren unterstützt BACnet Befehle um einen Device-Master-Key vom Key-Server über das Device-Netzwerk zu transportieren. Diese Möglichkeiten haben jedoch den Nachteil, dass sie aufwendig und fehleranfällig sind, da sie auf manueller Eingabe basieren oder unsicher sind, da eine Verteilung von Schlüsseln über das ungesicherte Netzwerk durchgeführt wird.

Kryptographische Verfahren werden unter anderem zum Verschlüsseln von Botschaften, Signieren von Dokumenten und Authentifizieren von Personen oder Objekten verwendet. Hierfür eignen sich insbesondere so genannte asymmetrische Verschlüsselungsverfahren, die für einen Teilnehmer sowohl einen privaten und geheim gehaltenen Schlüssel als auch einen öffentlichen Schlüssel vorsehen.

Beim Verschlüsseln einer Botschaft erhält der Absender den öffentlichen Schlüssel des gewünschten Adressaten und verschlüsselt damit die Botschaft. Nur der Adressat ist danach in der Lage, die Botschaft mit dem nur ihm bekannten privaten Schlüssel wieder zu entschlüsseln.

Beim Signieren eines Dokuments berechnet ein Unterzeichnender aus einem Dokument mit seinem privaten Schlüssel eine elektronische Unterschrift. Andere Personen können ohne weiteres die Unterschrift mit Hilfe des öffentlichen Schlüssels des Unterzeichnenden verifizieren. Es lassen sich jedoch nur Unterschriften mit dem öffentlichen Schlüssel verifizieren, die mit dem zugehörigen privaten Schlüssel signiert werden. Durch diese eindeutige Zuordnung und die Annahme, dass der private Schlüssel von dem Unterzeichnenden geheim gehalten wird, ergibt sich eine eindeutige Zuordnung der Signatur zu dem Unterzeichnenden und dem Dokument.

Die asymmetrischen Kryptographieverfahren basieren, wie oben ausgeführt, auf einem privaten und einem öffentlichen Schlüssel. Dabei wird der öffentliche Schlüssel aus dem privaten Schlüssel mittels eines vorbestimmten Algorithmus generiert. Wesentlich für die kryptographischen Verfahren ist, dass eine Umkehrung, d. h. eine Bestimmung des privaten Schlüssels aus dem öffentlichen Schlüssel in vertretbarer Zeit mit den zur Verfügung stehenden Rechenkapazitäten nicht zu bewältigen ist. Letzteres ist gewährt, falls die Schlüssellänge des privaten Schlüssels eine Mindestlänge erreicht. Die Mindestlänge des Schlüssels ist von den verwendeten Algorithmen für die Verschlüsselung und der Bestimmung des öffentlichen Schlüssels abhängig.

Die Operationen mit den öffentlichen oder den privaten Schlüsseln erfordern einen Rechenaufwand. Dieser ist abhängig von den verwendeten Algorithmen und auch von der Länge der verwendeten Schlüssel. Hierbei erweist es sich als vorteilhaft, kryptographische Verfahren basierend auf elliptischen Kurven zu verwenden, da diese eine hohe Sicherheit bei kurzen Schlüssellängen gewähren. Bisher ist für Kryptographieverfahren basierend auf elliptischen Kurven im Gegensatz zu anderen Verfahren keine Bestimmung des privaten Schlüssels aus dem öffentlichen Schlüssel bekannt, deren Rechenaufwand langsamer als mit exponentiellem Anstieg mit zunehmender Schlüssellänge ansteigt.

Herkömmliche Verfahren zum Absichern eines Schlüsselaushandelns sind typischerweise aufwändig, fehleranfällig und unsicher. Insbesondere in der Gebäudetechnik beziehungsweise Gebäudeautomatisierung sind keine Verfahren bekannt, welche es ermöglichen, kryptographische Schlüssel, welche zum Verschlüsseln einer Kommunikation dienen, auf sichere Art und Weise in einem ungesicherten Netzwerk auszuhandeln.

Die Druckschrift WO 2005/010214 A2 offenbart ein Verfahren zum Aushandeln eines symmetrischen Schlüssels für die Kommunikation zwischen drahtlosen Sensorknoten eines Netzwerks, bei dem das Aushandeln des symmetrischen Schlüssels zwischen einem Sensorknoten und einem Schlüsselcenter mithilfe von in den Sensorknoten gespeicherten asymmetrischen Schlüsseln abgesichert wird.

Es ist daher eine Aufgabe der vorliegenden Erfindung, ein Verfahren und eine Vorrichtung zur Gewährleistung einer Netzwerksicherheit und insbesondere zum Absichern eines Aushandelns von mindestens einem kryptographischen Schlüssel zwischen Geräten bereitzustellen.

Diese Aufgabe wird durch ein Verfahren zum Absichern eines Aushandelns von kryptographischen Schlüsseln zwischen Geräten aufweisend die Merkmale des Patentanspruchs 1 gelöst.

Bei den Geräten kann es sich um Bauelemente, Maschinen, Heizungselemente und/oder Fertigungsanlagen handeln. Vorzugsweise findet das Verfahren in einem Anwendungsszenario der Gebäudeautomatisierung Einsatz. Hierbei sind dem Durchschnittsfachmann weitere Geräte bekannt, welche untereinander kommunizieren und dabei einen kryptographischen Schlüssel aushandeln. Es ist möglich, dass eines der Geräte eine zentrale Steuerungsfunktion bereitstellt. Zum Beispiel kann eines der Geräte als eine zentrale Managementstation beziehungsweise eine Geräteverwaltungsstation vorliegen. In einem Gebäude können somit unterschiedliche Geräte verbaut sein, welche unter Vermittlung eines ausgewiesenen zentralen Gerätes, zum Beispiel einem Key-Server, untereinander kommunizieren, wobei es notwendig sein kann, dass diese Kommunikation abgesichert ist.

Bei den Geräten, welche in dem Gebäude verbaut sind, kann es sich zum Beispiel um sicherheitskritische Geräte handeln. So ist es möglich, dass diese Geräte eine Türschließanlage darstellen und/oder diese steuern. Um zugangsgeschützte Bereiche innerhalb des Gebäudes nur autorisiertem Personal zugänglich zu machen bedarf es Absicherungstechniken, welche ermöglichen, dass eine Kommunikation zwischen den Geräten und insbesondere ein Aushandeln von mindestens einem kryptographischen Schlüssel zwischen den Geräten, abgesichert werden kann. Absichern bezieht sich hierbei auf das Verhindern eines Abhörens von Nachrichten, welche zwischen den Geräten ausgetauscht werden sowie auf eine Gewährleistung einer Integrität, das heißt einer Unverfälschtheit der ausgetauschten Nachrichten, zwischen den Geräten.

Ein Verschlüsseln einer Kommunikation kann mittels eines kryptographischen Schlüssels durchgeführt werden. Hierbei ist es typischer Weise notwendig, dass mindestens ein Schlüssel an miteinander kommunizierende Geräte verteilt wird. Bei diesem Schlüssel, welcher an die jeweiligen Geräte verteilt werden muss kann es sich zum Beispiel um einen Masterschlüssel handeln. Damit Geräte verschlüsselt kommunizieren können ist es typischer Weise notwendig sowohl einen Masterschlüssel als auch einen Nebenschlüssel zu einem Verschlüsseln beziehungsweise zu einem Entschlüsseln der Nachricht verfügbar zu haben.

Folglich muss mindestens einer dieser kryptographischen Schlüssel zwischen den Geräten ausgehandelt werden. Hierzu kann es notwendig sein zumindest den Masterschlüssel, auch Hauptschlüssel genannt, an alle Kommunikationspartner, das heißt kommunizierenden Geräte zu übermitteln. Bei einer Übermittlung des Masterschlüssels an die Geräte kann es jedoch zu einem Abhören dieses Masterschlüssels kommen. Um dieses Abhören zu verhindern, werden in einer Ausführungsform des erfindungsgemäßen Verfahrens zum Absichern eines Aushandelns von mindestens einem kryptographischen Schlüssel ein privater Schlüssel und ein öffentlicher Schlüssel für jedes einzelne der Geräte bereitgestellt. Mit diesem privaten und diesem öffentlichen Schlüssel ist es nunmehr möglich, ein Aushandeln von mindestens einem kryptographischen Schlüssel, zum Beispiel dem Masterschlüssel, abzusichern.

Ein Bereitstellen des privaten Schlüssels und des öffentlichen Schlüssels kann zum Beispiel mittels herkömmlicher Methoden durchgeführt werden. Hierzu sind dem Fachmann unterschiedliche Vorgehensweisen auf dem technischen Gebiet der Kryptographie bekannt. Gemäß einer Ausführungsform des Verfahrens zum Absichern eines Aushandelns von mindestens einem kryptographischen Schlüssel kann ein Generieren beziehungsweise ein Erzeugen des privaten Schlüssel und des öffentlichen Schlüssels für jedes einzelne Gerät durchgeführt werden. Das heißt, dass jedes der Geräte, welche in dem Gebäude verbaut ist, genau einen privaten Schlüssel und genau einen öffentlichen Schlüssel zugewiesen bekommt. Hierbei kann es vorteilhaft sein, dass einem zentralen Steuergerät innerhalb des Gebäudes, zum Beispiel der Geräteverwaltungsstation, alle Schlüsselpaare bekannt sind. Ferner kann es notwendig sein, dass allen Geräten der eigene private Schlüssel wie auch der eigene öffentliche Schlüssel bekannt ist. Soll ein Aushandeln von mindestens einem kryptographischen Schlüssel in einem Client-Server-Szenario durchgeführt werden, so kann der Geräteverwaltungsstation jedes der Schlüsselpaare, aufweisend einen privaten Schlüssel und einen öffentlichen Schlüssel, für jedes der Geräte bekannt sein. Somit ist es möglich, dass die Geräte nicht direkt untereinander kommunizieren, das heißt nicht direkt untereinander ein Aushandeln von mindestens einem kryptographischen Schlüssel durchführen, sondern dass diese mittels einer zentralen Instanz, nämlich der Geräteverwaltungsstation, kommunizieren.

Wurde für jedes der Geräte ein privater Schlüssel und ein öffentlicher Schlüssel erstellt, so kann dieses Schlüsselpaar dem jeweiligen Gerät mitgeteilt werden. Hierzu kann ein Abspeichern des privaten Schlüssels und des öffentlichen Schlüssels in jedem einzelnen Gerät vorgesehen sein. Hierzu ist es möglich, dass jedes Gerät einen Datenspeicher zum Abspeichern des privaten und des öffentlichen Schlüssels aufweist.

Da nunmehr für jedes einzelne der Geräte ein privater Schlüssel sowie ein öffentlicher Schlüssel generiert und abgespeichert ist, kann ein Aushandeln des mindestens einen kryptographischen Schlüssels zwischen den Geräten in Abhängigkeit des abgespeicherten privaten Schlüssels und des abgespeicherten öffentlichen Schlüssels durchgeführt werden. Dies kann beispielsweise mittels des BACnet-Netzwerkprotokolls durchgeführt werden, wobei erfindungsgemäß der abgespeicherte private Schlüssel und der abgespeicherte öffentliche Schlüssel zur Verschlüsselung der Kommunikation Verwendung finden. Erfolgt das Aushandeln von mindestens einem kryptographischen Schlüssel gemäß dem BACnet-Netzwerkprotokoll, so wird ein Nachrichtenaustausch gemäß diesem BACnet-Netzwerkprotokoll mittels des privaten Schlüssels und mittels des öffentlichen Schlüssels gesichert.

Das Aushandeln von kryptographischen Schlüsseln kann zum Beispiel ein Generieren eines Masterschlüssels für jedes der Geräte umfassen. Hierbei kann der Masterschlüssel jedem Gerät bekannt sein, das heißt das Gerät kennt nicht nur den eigenen Masterschlüssel sondern auch jeweils die Masterschlüssel der anderen Geräte. Ferner kann ein Erzeugen eines Nebenschlüssels für jedes der Geräte erfolgen, wobei der generierte Nebenschlüssel jeweils nur jedem Gerät selbst bekannt ist. Außerdem kann ein Verschlüsseln des jeweiligen Nebenschlüssels in Abhängigkeit des Masterschlüssels durch jedes einzelne Gerät erfolgen. Die somit verschlüsselten Nebenschlüssel können nun an jedes der Geräte verteilt werden.

Soll ein Aushandeln des mindestens einen kryptographischen Schlüssels mittels einer zentralen Steuereinrichtung, zum Beispiel der Geräteverwaltungsstation erfolgen, so ist es vorteilhaft, dass der Geräteverwaltungsstation nun paarweise Masterschlüssel vorliegen, das heißt ein Masterschlüssel für genau ein Gerät sowie einen Masterschlüssel für die Geräteverwaltungsstation. In einem weiteren paarweisen Masterschlüssel liegt der Geräteverwaltungsstation ein Masterschlüssel für ein nächstes Gerät vor mitsamt einem nächsten Masterschlüssel für die Geräteverwaltungsstation. Hierbei ist es auch möglich, dass die Geräteverwaltungsstation genau einen Masterschlüssel aufweist. Zur Veranschaulichung der paarweisen Masterschlüssel sei auf die folgende Tabelle verwiesen:

| Geräteverwaltungsstation | Gerät | Schlüsselwert |
|---|---|---|
| GVS-ID1 | G1-ID1 | Schlüsselwert 1 |
| GVS-ID2 | G2-ID2 | Schlüsselwert 2 |
| GVS-ID3 | G3-ID3 | Schlüsselwert 3 |
| ... | ... | ... |
| GVS-IDn | Gn-IDn | Schlüsselwert n |

In der oben gezeigten Tabelle sind für typischer Weise eine Geräteverwaltungsstation GVS Schlüsselpaare mitsamt deren Wert eingetragen. Der Parameter n bezieht sich hierbei auf die Anzahl der Geräte. Es ist möglich dass die eine Geräteverwaltungsstation mittels unterschiedlicher Masterschlüssel GVS-ID1, GVS-ID2, GVS-ID3, ... , GVS-IDn mit den Endgeräten kommuniziert oder dass die Geräteverwaltungsstation mittels gleicher Schlüsselwerte mit den Geräten kommuniziert, dass also GVS-ID1, GVS-ID2, GVS-ID3, ... , GVS-IDn den selben Identifikationswert aufweisen.

Besonders vorteilhaft an dem beschriebenen Verfahren zum Absichern eines Aushandelns von mindestens einem kryptographischen Schlüssel gemäß einer Ausführungsform der vorliegenden Erfindung ist es, dass sowohl der öffentliche Schlüssel als auch der private Schlüssel bereits vor einem Betreiben der Geräte generiert werden kann und in dem jeweiligen Gerät abgespeichert werden kann. Dies ist insbesondere deshalb vorteilhaft, da ein Aushandeln sowie ein Einbringen eines privaten Schlüssels und eines öffentlichen Schlüssels zur Laufzeit in ein Gerät entfallen können. Folglich ist es gemäß einer Ausführungsform der vorliegenden Erfindung möglich, bereits zur Herstellung der Geräte, also offline den privaten Schlüssel und den öffentlichen Schlüssel in einer gesicherten Umgebung auf den jeweiligen Geräten zu speichern. Somit wird das besonders fehleranfällige und unsichere Aushandeln des privaten Schlüssels und des öffentlichen Schlüssels zur Laufzeit vermieden.

Jegliche weitere Kommunikation zwischen den Geräten kann nunmehr mittels des abgespeicherten privaten Schlüssels und des abgespeicherten öffentlichen Schlüssels abgesichert werden. Hierzu kann ein Verschlüsseln derjenigen Nachrichten durchgeführt werden, welche dem Aushandeln von mindestens einem kryptographischen Schlüssel dienen.

In einer Ausführungsform des Verfahrens gemäß der vorliegenden Erfindung wird ein Verschlüsseln einer Kommunikation zwischen den Geräten mittels des ausgehandelten kryptographischen Schlüssels durchgeführt.

Dies hat den Vorteil, dass eine Kommunikation zwischen den Geräten mittels eines auf sichere Weise erzeugten kryptographischen Schlüssels abgesichert werden kann.

In einer weiteren Ausführungsform des Verfahrens gemäß der vorliegenden Erfindung wird das Abspeichern des privaten Schlüssels und des öffentlichen Schlüssels während eines Herstellens und/oder vor einem in Betrieb nehmen des jeweiligen Gerätes durchgeführt.

Dies hat den Vorteil, dass das Abspeichern des privaten Schlüssels und des öffentlichen Schlüssels von einem Gerätehersteller in einer sicheren Umgebung, das heißt ohne ein Aushandeln des privaten Schlüssels und des öffentlichen Schlüssels zur Laufzeit der Geräte ausgeführt werden kann.

In einer weiteren Ausführungsform des Verfahrens gemäß der vorliegenden Erfindung wird das Aushandeln der kryptographischen Schlüssel nach einem in Betrieb nehmen der Geräte durchgeführt.

Dies hat den Vorteil, dass das Aushandeln der kryptographischen Schlüssel dynamisch zur Laufzeit der Geräte, jedoch nachdem bereits der private Schlüssel und der öffentliche Schlüssel in dem Gerät abgespeichert sind, ausgeführt werden kann.

In einer weiteren Ausführungsform des Verfahrens gemäß der vorliegenden Erfindung wird das Aushandeln der kryptographischen Schlüssel gemäß einem Netzwerkprotokoll durchgeführt.

Dies hat den Vorteil, dass bei dem Aushandeln der kryptographischen Schlüssel bereits bestehende Netzwerkinfrastrukturen mittels bereits bestehenden Netzwerkprotokollen betrieben werden können.

In einer weiteren Ausführungsform des Verfahrens gemäß der vorliegenden Erfindung implementiert das Netzwerkprotokoll mindestens eine Kryptographiemethode.

Dies hat den Vorteil, dass das Netzwerkprotokoll zusätzliche Absicherungsmaßnahmen vorsieht.

In einer weiteren Ausführungsform des Verfahrens gemäß der vorliegenden Erfindung wird das Aushandeln zumindest teilweise mittels eines Building Automation and Control Network Netzwerkprotokolls durchgeführt.

Dies hat den Vorteil, dass das beschriebene Verfahren zum Absichern eines Aushandelns von kryptographischen Schlüsseln insbesondere in Anwendungsszenarien der Gebäudeautomatisierung Einsatz finden kann.

In einer weiteren Ausführungsform des Verfahrens gemäß der vorliegenden Erfindung umfasst das Aushandeln mindestens einen direkten oder indirekten Nachrichtenaustausch zwischen den Geräten.

Dies hat den Vorteil, dass zum Beispiel bei einem Aushandeln von kryptographischen Schlüsseln die Geräte direkt miteinander, zum Beispiel in einem Peer-to-Peer Netzwerk, oder indirekt, zum Beispiel in einem Client-Server Netzwerk miteinander kommunizieren können.

In einer weiteren Ausführungsform des Verfahrens gemäß der vorliegenden Erfindung wird der Nachrichtenaustausch mittels mindestens eines drahtlosen oder drahtgebundenen Netzwerkes durchgeführt.

Dies hat den Vorteil, dass der Nachrichtenaustausch innerhalb eines Gebäudes drahtlos, zum Beispiel durch Gebäudewände hinweg, oder drahtgebunden, zum Beispiel mittels breitbandiger kabelgebundener Datenverbindungen, durchgeführt werden kann.

In einer weiteren Ausführungsform des Verfahrens gemäß der vorliegenden Erfindung wird mindestens ein Sicherheitszertifikat zu einer Echtheitsprüfung für mindestens eines der Geräte erstellt.

Dies hat den Vorteil, dass ein zusätzlicher Sicherheitsmechanismus vorgesehen ist, mittels dessen jedes einzelne Gerät authentisiert werden kann.

In einer weiteren Ausführungsform des Verfahrens gemäß der vorliegenden Erfindung wird das Sicherheitszertifikat in Abhängigkeit von mindestens einem der öffentlichen Schlüssel erstellt.

Dies hat den Vorteil, dass das Sicherheitszertifikat in Abhängigkeit von einem auf sichere Weise erstellten öffentlichen Schlüssel erstellt wird.

In einer weiteren Ausführungsform des Verfahrens gemäß der vorliegenden Erfindung weist mindestens einer der öffentlichen Schlüssel, der privaten Schlüssel und/oder der kryptographische Schlüssel einen Zeitstempel, einen Hinweis auf eine Zugriffsberechtigung, eine alphanumerische Zeichenkette, einen numerischen Wert und/oder Schlüsseldaten auf.

Dies hat den Vorteil, dass mindestens einer der Schlüssel mit einer Gültigkeitsdauer bezüglich einer bestimmten Geräteidentität sowie Rechtespezifikation versehen werden kann.

In einer weiteren Ausführungsform des Verfahrens gemäß der vorliegenden Erfindung wird das Bereitstellen des privaten Schlüssels und des öffentlichen Schlüssels mittels eines Schlüssel-Servers durchgeführt.

Dies hat den Vorteil, dass bereits bestehende Infrastrukturen und Schlüsselausgabestellen in dem vorliegenden Verfahren Anwendung finden können.

Die Aufgabe wird ferner gelöst durch eine Vorrichtung zur Absicherung eines Aushandelns von kryptographischen Schlüsseln für jedes einzelne von Geräten nach Anspruch 14. Die Erfindung betrifft ferner ein Computerprogrammprodukt, welches die Durchführungen der beschriebenen Verfahren veranlasst sowie einen Datenspeicher, der das Computerprogrammprodukt abspeichert.

Somit werden ein Verfahren und eine Vorrichtung zur Absicherung eines Aushandelns von kryptographischen Schlüsseln für jedes einzelne von Geräten bereitgestellt, welche es erlauben mit wenig Rechenaufwand und ohne der Notwendigkeit eines Nachrichtenaustausches zum Aushandeln des privaten Schlüssels und des öffentlichen Schlüssels ein Aushandeln von kryptographischen Schlüsseln abzusichern.

In einer Ausführungsform des Verfahrens erfolgt erfindungsgemäß ein Bereitstellen eines privaten Schlüssels und eines öffentlichen Schlüssels getrennt von einem Aushandeln der kryptographischen Schlüssel wodurch das Bereitstellen des privaten Schlüssels und des öffentlichen Schlüssels zu einer Herstellungszeit der Geräte durchgeführt werden kann und das Aushandeln der kryptographischen Schlüssel zur Laufzeit der Geräte durchgeführt werden kann. Da das Bereitstellen des privaten Schlüssels und des öffentlichen Schlüssels zur Herstellungszeit der Geräte erfolgen kann, können diese beiden Schlüssel, nämlich der private Schlüssel und der öffentliche Schlüssel, in einem gesicherten Bereich, wie zum Beispiel einer Geräteherstellungsfabrik, erstellt werden und in sicherer Weise direkt in das jeweilige Gerät abgespeichert werden.

Weitere vorteilhafte Ausgestaltungen der Erfindung sind Gegenstand der Unteransprüche sowie der im Folgenden beschriebenen Ausführungsbeispiele. Im Weiteren wird die Erfindung anhand beispielhafter Implementierungen unter Bezugnahme der beigelegten Figuren näher erläutert.

Es zeigt dabei:
- Figur 1: eine Illustration eines Anwendungsbeispiels eines Verfahrens zum Absichern eines Aushandelns von mindestens einem kryptographischen Schlüssel zwischen Geräten gemäß einer Ausführungsform der vorliegenden Erfindung;
- Figur 2: ein Ablaufdiagramm eines Verfahrens zum Absichern eines Aushandelns von mindestens einem kryptographischen Schlüssel zwischen Geräten gemäß einer Ausführungsform der vorliegenden Erfindung;
- Figur 3: ein detailliertes Ablaufdiagramm eines Verfahrens zum Absichern eines Aushandelns von mindestens einem kryptographischen Schlüssel zwischen Geräten gemäß einer Ausführungsform der vorliegenden Erfindung;
- Figur 4: ein Blockdiagramm einer Vorrichtung zur Absicherung eines Aushandelns von mindestens einem kryptographischen Schlüssel zwischen Geräten gemäß einer Ausführungsform der vorliegenden Erfindung; und
- Figur 5: ein detailliertes Blockdiagramm einer Vorrichtung zur Absicherung eines Aushandelns von mindestens einem kryptographischen Schlüssel zwischen Geräten gemäß einer Ausführungsform der vorliegenden Erfindung.

In den Figuren sind gleiche beziehungsweise funktionsgleiche Elemente mit den gleichen Bezugszeichen versehen worden, sofern nichts anderes angegeben ist.

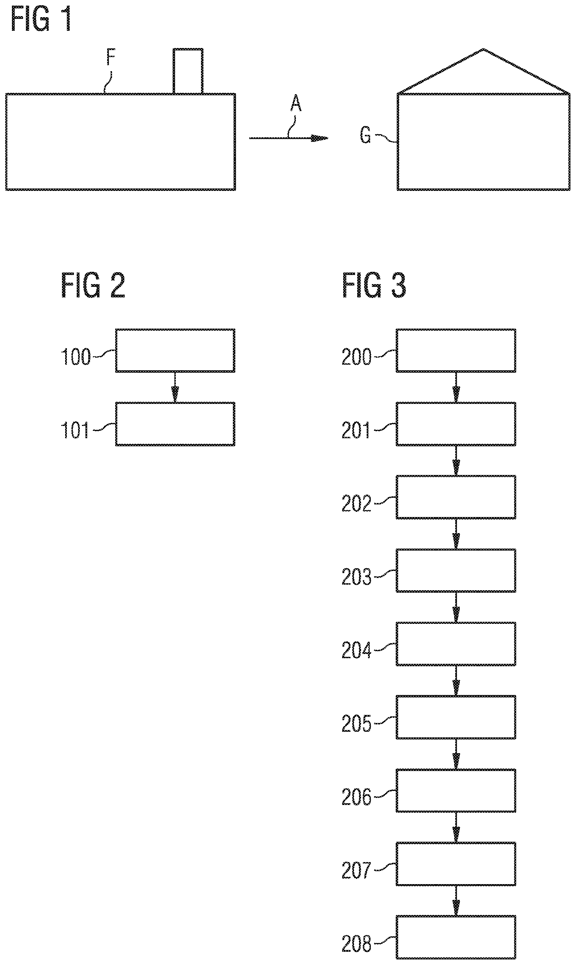

Figur 1 zeigt eine Illustration eines Verfahrens zum Absichern eines Aushandelns von mindestens einem kryptographischen Schlüssel gemäß einer Ausführungsform der vorliegenden Erfindung.

Hierbei wird ein Gerät in einer Fabrik F hergestellt. Das Gerät ist in dem vorliegenden Ausführungsbeispiel ein Haushaltsgerät und soll in einem Gebäude G nach einer Auslieferung A eingebaut werden. Bei dem Gerät handelt es sich zum Beispiel um einen Heizkörper, welcher mittels einer Gebäudeautomatisierung, das heißt einer selbstständigen Steuerung von Geräten innerhalb eines Gebäudes, bezüglich seiner Heizleistung gesteuert wird. Da nicht nur ein einzelner Heizkörper in dem Gebäude G verbaut wird, sondern eine Vielzahl an Heizkörpern, ist es für eine Temperaturregelung in dem Gebäude G notwendig, dass die einzelnen Heizkörper untereinander kommunizieren und dabei zum Beispiel Messdaten bezüglich einer Wärmeentwicklung austauschen.

Die Kommunikation zwischen den Geräten soll im vorliegenden Ausführungsbeispiel mittels eines kryptographischen Schlüssels, welchen die Geräte zur Laufzeit aushandeln, abgesichert werden. Hierzu ist es notwendig, dass bereits das Aushandeln des mindestens einen kryptographischen Schlüssels abgesichert wird. Würde das Aushandeln des mindestens einen kryptographischen Schlüssels nicht abgesichert werden, so besteht das Risiko, dass unberechtigte Dritte den kryptographischen Schlüssel ausspähen können, indem sie den Nachrichtenaustausch zwischen den Geräten abhören.

Zum Absichern des Aushandelns des mindestens einen kryptographischen Schlüssels erfolgt das Verfahren in der vorliegenden Ausführungsform des Verfahrens zum Absichern eines Aushandelns von mindestens einem kryptographischen Schlüssel mittels eines privaten Schlüssels und eines öffentlichen Schlüssels für jedes einzelne Gerät. Das heißt, dass für jedes einzelne Gerät ein privater Schlüssel und ein öffentlicher Schlüssel bereitgestellt werden. Liegen also n Geräte vor, so ist es in einer Ausführungsform möglich, dass n private Schlüssel sowie n öffentliche Schlüssel bereitgestellt werden. Folglich ist jedem einzelnen Gerät genau ein bestimmter bereitgestellter privater Schlüssel und öffentlicher Schlüssel zugeordnet. Eben dieser private Schlüssel und eben dieser öffentliche Schlüssel werden auf jedem einzelnen Gerät abgespeichert.

Das Bereitstellen des privaten Schlüssels und des öffentlichen Schlüssels ist besonders sicherheitskritisch, da mittels des privaten Schlüssels und des öffentlichen Schlüssels das Aushandeln des mindestens einen kryptographischen Schlüssels abgesichert wird. In der vorliegenden Ausführungsform des Verfahrens zum Absichern des Aushandelns gemäß der vorliegenden Erfindung erfolgen das Bereitstellen und/oder das Abspeichern des privaten Schlüssels und des öffentlichen Schlüssels in der Fabrik F. Die Fabrik F stellt eine vertrauenswürdige Instanz bezüglich einem Bereitstellen und einem Abspeichern des privaten und des öffentlichen Schlüssels dar. Somit ist es möglich, eben diese Schlüssel unter besonders sicheren Bedingungen innerhalb der Fabrik F bereitzustellen und abzuspeichern. Somit ist es möglich in einem beliebigen Herstellungsschritt der Geräte die zu einem Verbauen in dem Gebäude G vorgesehen sind, den privaten Schlüssel und den öffentlichen Schlüssel bereitzustellen. Besonders vorteilhaft ist hierbei, dass der private und der öffentliche Schlüssel nicht zu einer Laufzeit der Geräte, also während einem Betreiben der Geräte, ausgehandelt werden müssen. Folglich sind der private und der öffentliche Schlüssel vor einer Auslieferung A im Gebäude G bereits in jedes einzelne Gerät abgespeichert.

Somit kann nach der Auslieferung A der Geräte ein Aushandeln des mindestens einen kryptographischen Schlüssels zwischen den ausgelieferten Geräten mittels der unter sicheren Bedingungen bereitgestellten privaten Schlüssel und öffentlichen Schlüssel abgesichert werden.

Figur 2 zeigt ein Verfahren zum Absichern des Aushandelns von mindestens einem kryptographischen Schlüssel zwischen Geräten. Das Verfahren weist die folgenden Schritte auf:
Abspeichern 100 eines privaten Schlüssels und eines öffentlichen Schlüssels auf jedem einzelnen Gerät, wobei der private Schlüssel und der öffentliche Schlüssel für das jeweilige Gerät bereitgestellt werden.

Aushandeln 101 des mindestens einen kryptographischen Schlüssels zwischen den Geräten in Abhängigkeit des abgespeicherten privaten Schlüssels und des abgespeicherten öffentlichen Schlüssels.

Die beschriebenen Verfahrensschritte können weitere Unterschritte aufweisen sowie iterativ und/oder in anderer Reihenfolge ausgeführt werden.

Figur 3 zeigt ein detailliertes Ablaufdiagramm eines Verfahrens zum Absichern eines Aushandelns von mindestens einem kryptographischen Schlüssel zwischen Geräten gemäß einer Ausführungsform der vorliegenden Erfindung.

In einem ersten Verfahrensschritt 200 erfolgt ein Bereitstellen eines privaten Schlüssels für genau ein einzelnes Gerät. In einem analogen Verfahrensschritt 201 erfolgt ein Bereitstellen eines öffentlichen Schlüssels für genau ein Gerät. Typischerweise werden die Verfahrensschritte 200 und 201 so lange wiederholt ausgeführt, bis für jedes einzelne Gerät ein privater Schlüssel und ein öffentlicher Schlüssel vorliegen. Das Bereitstellen der Schlüssel in Verfahrensschritt 200 sowie Verfahrensschritt 201 kann zum Beispiel mittels eines Generierens von Zufallszahlen, Passwörtern, Identifikationsnummern, Geräteidentitäten und/oder weiterer geeigneter Schlüsselbereitstellungsverfahren durchgeführt werden.

In einem darauffolgenden Verfahrensschritt 202 folgt ein Abspeichern des privaten Schlüssels sowie ein Abspeichern des öffentlichen Schlüssels in Verfahrensschritt 203. Analog zum Bereitstellen des privaten Schlüssels und des öffentlichen Schlüssels in Verfahrensschritt 200 und 201 können die Verfahrensschritte 202 und 203 wiederholt ausgeführt werden. Folglich wird auf jedem einzelnen Gerät in Verfahrensschritt 202 der jeweilige private Schlüssel abgespeichert und in Verfahrensschritt 203 auf jedem Gerät der jeweilige öffentliche Schlüssel abgespeichert.

In einem darauffolgenden optionalen Verfahrensschritt 204 erfolgt ein Ausliefern beziehungsweise ein Verbauen des Gerätes, in dem der private Schlüssel und der öffentliche Schlüssel abgespeichert sind. Typischerweise wird hierbei eine Vielzahl von Geräten verbaut.

In einem weiteren vorbereitenden Verfahrensschritt 205 erfolgt ein Einrichten des Netzwerkes, mittels dessen die Geräte untereinander kommunizieren können. Das Einrichten eines Netzwerkes umfasst sowohl das Bereitstellen physischer Hardware als auch das Bereitstellen von Steuerungsbefehlen beziehungsweise Netzwerkprotokollen. Zum Beispiel kann in dem Verfahrensschritt 205 ein Peer-to-Peer oder ein Client-Server Netzwerk eingerichtet werden.

In einem darauffolgenden, optionalen Verfahrensschritt 206 ist es möglich, öffentliche Informationen, zum Beispiel einen öffentlichen Schlüssel zwischen den Geräten, auszutauschen. Das Austauschen der öffentlichen Schlüssel in Verfahrensschritt 206 kann zum Beispiel einem Identifizieren von Kommunikationspartnern, das heißt weiteren Geräten dienen. Der öffentliche Schlüssel kann zum Beispiel eine Seriennummer und/oder eine Netzwerkadresse eines Gerätes aufweisen.

Nunmehr kann ein Aushandeln des mindestens einen kryptographischen Schlüssels zwischen den Geräten in einem Verfahrensschritt 207 erfolgen. Das Aushandeln erfolgt hierbei in Abhängigkeit eines Verschlüsselns der Nachrichten mit dem jeweils im Verfahrensschritt 200 und 201 bereitgestellten privaten Schlüssel und/oder mit dem öffentlichen Schlüssel. Wurde der kryptographische Schlüssel zwischen den Geräten ausgehandelt, so erfolgt in Verfahrensschritt 208 ein Kommunizieren der Geräte. Hierbei ist es vorteilhaft das Kommunizieren mit dem ausgehandelten kryptographischen Schlüssel zu verschlüsseln beziehungsweise abzusichern.

Die beschriebenen Verfahrensschritte können Unterschritte aufweisen sowie iterativ und/oder in anderer Reihenfolge ausgeführt werden.

In einer weiteren Ausführungsform des Verfahrens zum Absichern eines Aushandelns von mindestens einem kryptographischen Schlüssel findet das BACnet-Netzwerkprotokoll Anwendung. Das BACnet dient hierbei als Transportprotokoll für die kryptographischen Nachrichten und für einen Einsatz von asymmetrischer Kryptographie. Man kann hierbei das abzusichernde Protokoll ebenfalls als Protokoll für eine sichere Aushandlung von Schlüsseln verwenden. Hierzu kann während der Fertigung der Geräte ein Gerätezertifikat mit dem öffentlichen Schlüssel sowie der zugehörige private Schlüssel und ein Rootzertifikat eingespeichert werden. Hierbei ist ein Key-Server vorgesehen, welcher mit den Geräten, auch Devices genannt, kommuniziert. Je Gerät wird zunächst eine gegenseitige Authentisierung von Device und Key-Server durchgeführt. Nach erfolgreicher Authentisierung wird dann zwischen Geräten und Key-Server ein Schlüssel ausgehandelt, der als Device-Master-Key verwendet wird. Dieses Aushandeln kann im Klartext erfolgen, da der Schlüssel selber nicht übertragen wird.

Als Authentisierungs- und Schlüsselaushandlungsprotokolle können Standardprotokolle verwendet werden, die die entsprechende Anforderung erfüllen, wie zum Beispiel TLS, Diffie-Hellman. Als Verschlüsselungsmechanismus können elliptische Kurven eingesetzt werden. Es können jedoch auch andere kryptographische Protokolle Verwendung finden. Als Transportprotokoll für die Authentifizierung und die Schlüsselaushandlungsnachrichten kann zum Beispiel BACnet Verwendung finden. Hierzu können proprietäre BACnet Objekteigenschaften definiert werden, die mit den Standard-BACnetdiensten beschrieben werden.

Besonders vorteilhaft sind hierbei die Kombination von asymmetrischer Kryptographie, deren Parameter schon während der Fertigung in die Geräte eingespeichert werden können, und ferner der Verwendung von BACnet als Transportprotokoll für die Authentisierung und Schlüsselaushandlung.

Somit erfolgt eine sichere Schlüsselaushandlung über ungesicherte BACnet-Netzwerke. Bei der Schlüsselaushandlung mit asymmetrischen Methoden müssen die übertragenen Einzelnachrichten nicht gesichert sein. Dennoch ist der ausgehandelte Schlüssel nur den beteiligten Geräten bekannt. Damit erübrigt sich eine Spezialverkabelung für die Übertragung oder zusätzliche Netzwerkschnittstellen für die gesicherte Verbindung mit dem Key-Server.

Ferner ist kein zusätzliches Protokoll zum Transport von Nachrichten für Authentisierung und Schlüsselaushandlung notwendig, da BACnet verwendet wird. Ferner ist eine eindeutige Authentisierung der Geräte möglich. Die Verwendung von Zertifikaten erlaubt die eindeutige Authentisierung der Devices während der Schlüsselaushandlung, falls dies benötigt wird. Außerdem besteht kein Konfigurationsaufwand zur Verteilung der Device-Master-Keys bei der Installation. Durch die Abspeicherung der benötigten Daten während der Fertigung ist zur Installationszeit kein Zusatzaufwand für die Device-Master-Key-Verteilung nötig. Bei Bedarf kann eine sichere Neuaushandlung des Device-Master-Keys ohne physikalischen Zugang zu den Devices stattfinden. Devices der Gebäudeautomatisierung können an sehr unzugänglichen Stellen verbaut sein. Wird aus irgendwelchen Gründen ein neuer Device-Master-Key benötigt, kann er basierend auf den vorhandenen asymmetrischen Daten leicht auf sichere Art über das Netz neu ausgehandelt werden.

Ferner ist der Device-Master-Key nur im Device und im Key-Server bekannt. Dadurch ist zusätzliche Sicherheit gegeben. Außerdem sind keine zusätzlichen Schnittstellen zum Auslesen oder ein Eingeben der Schlüssel nötig. Die Geräte müssen nicht unbedingt ein User-Interface aufweisen, das die Eingabe oder das Auslesen eines Schlüssels erlaubt. Werden die benötigten Daten zur Aushandlung des Schlüssels während der Fertigung angebracht, so ist ein User-Interface hierfür nicht notwendig.

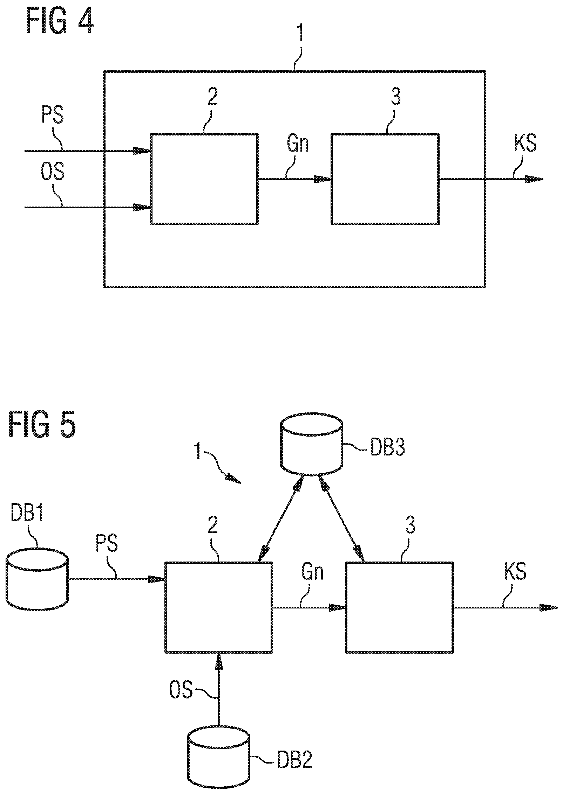

Figur 4 zeigt eine Vorrichtung 1 zur Absicherung eines Aushandelns von mindestens einem kryptographischen Schlüssel KS zwischen Geräten Gn gemäß einer Ausführungsform der vorliegenden Erfindung. Die Vorrichtung 1 weist auf:
Eine erste Recheneinrichtung 2 zum Abspeichern eines privaten Schlüssels PS und eines öffentlichen Schlüssels OS auf je einem Datenspeicher in jedem einzelnen Gerät Gn, wobei der private Schlüssel PS und der öffentliche Schlüssel OS für das jeweilige Gerät Gn bereitgestellt werden; und
eine zweite Recheneinrichtung 3 zum Aushandeln des mindestens einen kryptographischen Schlüssels KS zwischen den Geräten Gn in Abhängigkeit des abgespeicherten privaten Schlüssels PS und des abgespeicherten öffentlichen Schlüssels OS.

Figur 5 zeigt eine Vorrichtung 1 gemäß einer weiteren Ausführungsform der vorliegenden Erfindung und unterscheidet sich von der in Figur 4 gezeigten Vorrichtung 1 wie folgt:
Im vorliegenden Ausführungsbeispiel kommuniziert die erste Recheneinrichtung 2 mit einem entfernten Datenspeicher DB1. Hierbei kann beispielsweise der private Schlüssel PS aus dem entfernten Datenspeicher DB1 ausgelesen werden. Ferner kommuniziert die erste Recheneinrichtung 2 im weiteren Datenspeicher DB2 und liest hierbei den öffentlichen Schlüssel OS aus. Der Datenspeicher DB1 und der Datenspeicher DB2 können von einer Schlüsselbereitstellungsdistanz betrieben werden. Bei dem Datenspeicher DB1 und DB2 kann es sich jeweils um eine Datenbank eines Key-Servers, auch Schlüsselserver genannt, handeln. Die erste Recheneinrichtung 2 kann zum Beispiel in einem RFID-Chip integriert sein. Somit speichert die erste Recheneinrichtung 2 den privaten Schlüssel PS und den öffentlichen Schlüssel OS auf einem RFID-Chip. Dieser RFID-Chip kann an einem Gerät angebracht werden.

Die zweite Recheneinrichtung 3 kann beispielsweise als ein Mikroprozessor, welcher in einem der Geräte Gn integriert ist, vorliegen. Hierbei ist es möglich, dass das Gerät Gn geeignet ist, den privaten Schlüssel PS und den öffentlichen Schlüssel OS aus dem RFID-Chip auszulesen. Das Gerät Gn kann auch einen separaten Datenspeicher DB3 aufweisen. Der Datenspeicher DB3 kann zum Beispiel in dem RFID-Chip umfasst sein. Folglich liest die erste Recheneinrichtung 2 den privaten Schlüssel PS und den öffentlichen Schlüssel OS aus einem ersten Datenspeicher DB1 und einem zweiten Datenspeicher DB2 aus und speichert diese in dem Datenspeicher DB3.

In einer weiteren Ausführungsform der Vorrichtung 1 zur Absicherung eines Aushandelns von mindestens einem kryptographischen Schlüssel KS ist die erste Recheneinrichtung 2, die zweite Recheneinrichtung 3 sowie der Datenspeicher DB3 in dem Gerät Gn umfasst. Folglich ist in diesem Ausführungsbeispiel das Gerät Gn geeignet, in Abhängigkeit des bereitgestellten privaten Schlüssels PS und des bereitgestellten öffentlichen Schlüssels OS den kryptographischen Schlüssel KS mit weiteren Geräten Gn auszuhandeln.

## Patentansprüche

1. Verfahren zum Absichern eines Aushandelns von kryptographischen Schlüsseln (KS) für jedes einzelne von Geräten (Gn), mit den folgenden Schritten:
- Abspeichern (100) eines privaten Schlüssels (PS) und eines öffentlichen Schlüssels (OS) auf jedem einzelnen der Geräte (Gn), wobei der private Schlüssel (PS) und der öffentliche Schlüssel (OS) für das jeweilige Gerät (Gn) bereitgestellt werden;
- Abspeichern jedes der Schlüsselpaare, aufweisend einen privaten Schlüssel (PS) und einen öffentlichen Schlüssel (OS) für jedes einzelne der Geräte (Gn), auf einer Geräteverwaltungsstation; und
- Generieren (101) der kryptographischen Schlüssel (KS) für jedes einzelne der Geräte (Gn) in Abhängigkeit des abgespeicherten privaten Schlüssels (PS) und des abgespeicherten öffentlichen Schlüssels (OS) mittels der Geräteverwaltungsstation.

2. Verfahren nach Anspruch 1, wobei ein Verschlüsseln einer Kommunikation zwischen den Geräten (Gn) mittels des ausgehandelten kryptographischen Schlüssels (KS) durchgeführt wird.

3. Verfahren nach Anspruch 1 oder 2, wobei das Abspeichern des privaten Schlüssels (PS) und des öffentlichen Schlüssels (OS) während eines Herstellens und/oder vor einem Inbetriebnehmen des jeweiligen Geräts (Gn) durchgeführt wird.

4. Verfahren nach einem der Ansprüche 1 bis 3, wobei das Generieren (101) der kryptographischen Schlüssel (KS) nach einem Inbetriebnehmen der Geräte (Gn) durchgeführt wird.

5. Verfahren nach einem der Ansprüche 1 bis 4, wobei das Generieren (101) der kryptographischen Schlüssel (KS) gemäß einem Netzwerkprotokoll durchgeführt wird.

6. Verfahren nach Anspruch 5, wobei das Netzwerkprotokoll mindestens eine Kryptographiemethode implementiert.

7. Verfahren nach einem der Ansprüche 1 bis 6, wobei das Generieren (101) zumindest teilweise mittels eines Building Automation and Control Network Netzwerkprotokolls durchgeführt wird.

8. Verfahren nach einem der Ansprüche 1 bis 7, wobei das Generieren (101) mindestens einen direkten oder indirekten Nachrichtenaustausch zwischen den Geräten (Gn) umfasst.

9. Verfahren nach Anspruch 8, wobei der Nachrichtenaustausch mittels mindestens eines drahtlosen oder drahtgebundenen Netzwerkes durchgeführt wird.

10. Verfahren nach einem der Ansprüche 1 bis 9, wobei mindestens ein Sicherheitszertifikat zu einer Echtheitsprüfung für mindestens eines der Geräte (Gn) erstellt wird.

11. Verfahren nach Anspruch 10, wobei das Sicherheitszertifikat in Abhängigkeit von mindestens einem der öffentlichen Schlüssel (OS) erstellt wird.

12. Verfahren nach einem der Ansprüche 1 bis 11, wobei mindestens einer der öffentlichen Schlüssel (OS), der privaten Schlüssel (PS) und/oder die kryptographischen Schlüssel (KS) einen Zeitstempel, einen Hinweis auf eine Zugriffsberechtigung, eine alphanumerische Zeichenkette, einen numerischen Wert und/oder Schlüsseldaten aufweisen.

13. Verfahren nach einem der Ansprüche 1 bis 12, wobei das Bereitstellen des privaten Schlüssels (PS) und des öffentlichen Schlüssels (OS) mittels eines Schlüssel-Servers durchgeführt wird.

14. Vorrichtung (1) zur Absicherung eines Aushandelns von kryptographischen Schlüsseln (KS) für jedes einzelne von Geräten (Gn), insbesondere zur Durchführung eines Verfahrens gemäß der Ansprüche 1 bis 13, mit:
- einer ersten Recheneinrichtung (2) zum Abspeichern eines privaten Schlüssels (PS) und eines öffentlichen Schlüssels (OS) auf je einem Datenspeicher (DB3) in jedem einzelnen Gerät (Gn), wobei der private Schlüssel (PS) und der öffentliche Schlüssel (OS) für das jeweilige Gerät (Gn) bereitgestellt werden, und wobei jedes der Schlüsselpaare, aufweisend einen privaten Schlüssel (PS) und einen öffentlichen Schlüssel (OS), für jedes einzelne der Geräte (Gn) in einer Geräteverwaltungsstation gespeichert sind; und
- einer zweiten Recheneinrichtung (3) zum Generieren der kryptographischen Schlüssel (KS) für jedes einzelne der Geräte (Gn) in Abhängigkeit des abgespeicherten privaten Schlüssels (PS) und des abgespeicherten öffentlichen Schlüssels (OS) mittels der Geräteverwaltungsstation.

15. Computerprogrammprodukt, welches die Durchführung eines Verfahrens gemäß einem der Ansprüche 1 bis 13 veranlasst.

16. Datenspeicher, der das Computerprogrammprodukt gemäß Anspruch 15 speichert.

## Claims

1. Method for protecting a negotiation of cryptographic keys (KS) for each individual one of the devices (Gn), said method comprising the following steps of:
- storing (100) a private key (PS) and a public key (OS) on each individual one of the devices (Gn), the private key (PS) and the public key (OS) being provided for the respective device (Gn);
- storing each of the key pairs, having a private key (PS) and a public key (OS) for each individual one of the devices, on a device management station; and
- generating (101) the cryptographic key (KS) for each individual one of the devices (Gn) as a function of the stored private key (PS) and the stored public key (OS) by means of the device management station.

2. Method according to claim 1, wherein a communication between the devices (Gn) is encrypted by means of the negotiated cryptographic key (KS).

3. Method according to claim 1 or 2, wherein the private key (PS) and the public key (OS) are stored during manufacture of the respective device (Gn) and/or prior to its being put into operation.

4. Method according to one of claims 1 to 3, wherein the generation of the cryptographic key (KS) is conducted after the devices (Gn) have been put into operation.

5. Method according to one of claims 1 to 4, wherein the generation (101) of the cryptographic key (KS) is conducted in accordance with a network protocol.

6. Method according to claim 5, wherein the network protocol implements at least one cryptographic method.

7. Method according to one of claims 1 to 6, wherein the generation (101) is conducted at least partly by means of a BACnet (Building Automation and Control Network) network protocol.

8. Method according to one of claims 1 to 7, wherein the generation (101) includes at least one direct or indirect message exchange between the devices (Gn).

9. Method according to claim 8, wherein the message exchange is realised by means of at least one wireless or wired network.

10. Method according to one of claims 1 to 9, wherein at least one security certificate is created to allow an authentication check for at least one of the devices (Gn).

11. Method according to claim 10, wherein the security certificate is created as a function of at least one of the public keys (OS).

12. Method according to one of claims 1 to 11, wherein at least one of the public keys (OS), private keys (PS) and/or cryptographic keys (KS) has a timestamp, an access authorisation indicator, an alphanumeric character string, a numeric value and/or key data.

13. Method according to one of claims 1 to 12, wherein the private key (PS) and the public key (OS) are provided by means of a key server.

14. Apparatus (1) for protecting a negotiation of cryptographic keys (KS) for each individual one of the devices (Gn), in particular for performing a method according to one of claims 1 to 13, said apparatus comprising:
- a first computing entity (2) for storing a private key (PS) and a public key (OS) in one data storage facility (DB3) in each case in each individual device (Gn), the private key (PS) and the public key (OS) being provided for the respective device (Gn), and each of the key pairs, having a private key (PS) and a public key (OS) for each individual one of the devices (Gn), being stored in a device management station; and
- a second computing entity (3) for generating the cryptographic key (KS) for each individual one of the devices (Gn) as a function of the stored private key (PS) and the stored public key (OS) by means of the device management station.

15. Computer program product which initiates the execution of a method according to one of claims 1 to 13.

16. Data storage facility which stores the computer program product according to claim 15.

## Revendications

1. Procédé pour sécuriser une négociation de clés cryptographiques (KS) pour chacun d'un nombre d'appareils (Gn), comprenant les étapes suivantes :
- mémoriser (100) une clé privée (PS) et une clé publique (OS) sur chacun des appareils (Gn), la clé privée (PS) et la clé publique (OS) étant fournies pour l'appareil respectif (Gn) ;
- mémoriser chacune des paires de clés, comprenant une clé privée (PS) et une clé publique (OS) pour chacun des appareils (Gn), sur un poste de gestion d'appareils ; et
- générer (101) les clés cryptographiques (KS) pour chacun des appareils (Gn) en fonction de la clé privée (PS) mémorisée et de la clé publique (OS) mémorisée au moyen du poste de gestion d'appareils.

2. Procédé selon la revendication 1, dans lequel un cryptage d'une communication entre les appareils (Gn) est effectué au moyen de la clé cryptographique (KS) négociée.

3. Procédé selon la revendication 1 ou 2, dans lequel la mémorisation de la clé privée (PS) et de la clé publique (OS) est effectuée pendant la fabrication et/ou avant une mise en service de l'appareil respectif (Gn).

4. Procédé selon l'une des revendications 1 à 3, dans lequel la génération (101) des clés cryptographiques (KS) est effectuée après une mise en service des appareils (Gn).

5. Procédé selon l'une des revendications 1 à 4, dans lequel la génération (101) des clés cryptographiques (KS) est effectuée selon un protocole de réseau.

6. Procédé selon la revendication 5, dans lequel le protocole de réseau implémente au moins une méthode cryptographique.

7. Procédé selon l'une des revendications 1 à 6, dans lequel la génération (101) est effectuée au moins partiellement au moyen d'un protocole de réseau BACnet (Building Automation and Control Network).

8. Procédé selon l'une des revendications 1 à 7, dans lequel la génération (101) comprend au moins un échange de messages direct ou indirect entre les appareils (Gn).

9. Procédé selon la revendication 8, dans lequel l'échange de messages est effectué au moyen d'au moins un réseau sans fil ou filaire.

10. Procédé selon l'une des revendications 1 à 9, dans lequel il est établi au moins un certificat de sécurité pour une authentification pour au moins un des appareils (Gn).

11. Procédé selon la revendication 10, dans lequel le certificat de sécurité est établi en fonction d'au moins une des clés publiques (OS).

12. Procédé selon l'une des revendications 1 à 11, dans lequel au moins une des clés publiques (OS), des clés privées (PS) et/ou les clés cryptographiques (KS) présentent un horodatage, une indication sur une autorisation d'accès, une chaîne de caractères alphanumériques, une valeur numérique et/ou des données clés.

13. Procédé selon l'une des revendications 1 à 12, dans lequel la fourniture de la clé privée (PS) et de la clé publique (OS) est effectuée au moyen d'un serveur de clés.

14. Dispositif (1) pour sécuriser une négociation de clés cryptographiques (KS) pour chacun d'un nombre d'appareils (Gn), notamment pour la mise en oeuvre d'un procédé selon les revendications 1 à 13, comprenant :
- un premier moyen de calcul (2) pour mémoriser une clé privée (PS) et une clé publique (OS) sur à chaque fois une mémoire de données (DB3) dans chaque appareil (Gn), la clé privée (PS) et la clé publique (OS) étant fournies pour l'appareil respectif (Gn), et chacune des paires de clés, comprenant une clé privée (PS) et une clé publique (OS), étant mémorisée pour chacun des appareils (Gn) dans un poste de gestion d'appareils ; et
- un second moyen de calcul (3) pour générer les clés cryptographiques (KS) pour chacun des appareils (Gn) en fonction de la clé privée (PS) mémorisée et de la clé publique (OS) mémorisée au moyen du poste de gestion d'appareils.

15. Produit programme informatique, ordonnant la mise en oeuvre d'un procédé selon l'une des revendications 1 à 13.

16. Mémoire de données, mémorisant le produit programme informatique selon la revendication 15.
